# EUROPEAN PATENT SPECIFICATION

(11) **EP 2 689 914 B1**
(45) Date of publication and mention of the grant of the patent: **23.01.2019**
(21) Application number: 12761132.5
(22) Date of filing: 08.02.2012
(51) Int. Cl.: B29C 55/06, B29L 7/00

(54) **METHOD FOR STRETCHING FILM**
VERFAHREN ZUR STRECKUNG EINES FILMS
PROCÉDÉ POUR ÉTIRER UN FILM

(30) Priority: 22.03.2011 JP 2011062747
(43) Date of publication of application: 29.01.2014
(73) Proprietor: Toray Industries, Inc., Tokyo 103-8666 (JP)
(72) Inventor: KUSUNOKI, Yohei, Anpachi-gun, Gifu 5032395 (JP); HANADA, Tetsuji, Anpachi-gun, Gifu 5032395 (JP); KURIHARA, Tsutomu, Anpachi-gun, Gifu 5032395 (JP)
(74) Representative: Kador & Partner PartG mbB
(86) International application number: PCT/JP2012/052825
(87) International publication number: WO 2012/127917

(56) References cited:
- EP-A2- 0 299 560
- WO-A1-2006/112425
- FR-A1- 2 116 335
- JP-A- 9 141 736
- JP-A- H09 141 736
- JP-A- 2000 181 015
- JP-A- 2001 341 259
- JP-A- 2008 093 946

## Description

### TECHNICAL FIELD

The present invention relates to a method for stretching a thermoplastic resin film, and in particular to a method for stretching a thermoplastic resin film which is excellent in thickness evenness in the longitudinal direction and the width direction thereof and is unlikable to suffer from scratches such as adhesion scratches caused by a roll, and transcription scratches so as to be used suitably, particularly, for optical articles.

### BACKGROUND ART

Hitherto, there has been known a technique of heating a thermoplastic resin film to the glass transition temperature thereof or higher, and then stretching the film in the longitudinal direction (lengthwise stretching) by use of a difference in circumferential speed between rolls. As described in Patent Document 1, known is a method of passing a thermoplastic resin film, such as a polyester film, through a group of low-speed rolls so as to be heated to a stretching temperature that is the glass transition temperature (also referred to as Tg hereinafter) thereof or higher, and subsequently using a difference in circumferential speed between rolls to stretch the film lengthwise. As described in Patent Documents 1 and 2, it is suggested that a group of low-speed heating rolls and a group of high-speed cooling rolls are used, and further in connection with the material thereof, the surface materials of the rolls and the surface roughness of the rolls are specified in order to decrease surface defects generated on/in the film, such as adhesiveness and scratches.

Films for optical articles, especially for display articles, are desired to have an excellent transparency and be as little as possible in the number of optical defects generated therein. Requests for a decrease of optical defects are remarkably heightened, in particular, with an improvement in the performance of products or the quality thereof. When a substrate film is subjected to coating processing, in particular, thickness unevenness or scratches cause the generation of optical interference unevenness or coating defects.

Under such circumstances, as a lengthwise stretching method for restraining the generation of thickness unevenness, known is a method of setting a position where a film starts to be stretched (film stretch starting position) between rolls, and then stretching the film which is a thermoplastic resin film lengthwise while the film is locally and rapidly heated to a temperature ranging of Tg of the film - 5°C or higher and Tg + 30°C or lower through a noncontact-type locally and rapidly heating means located along the film width direction at the stretch starting position, as described in Patent Document 3.

As described in Patent Document 4, as a lengthwise stretching method that hardly gives a scratch which may become an optical defect to the surface, known is a method in which at the time of using a heating device to heat a film in a lengthwise stretching step, the width thereof to be heated in the longitudinal direction is set into the range of 2 mm or more and 25 mm or less between rolls.
Patent Document 5 discloses a process of making biaxially oriented polyethylene terephthalate photographic film having a certain amount of curl in the longitudinal direction, where the longitudinal stretching of the film is done while the film is asymmetrically heated across its thickness. Pre-heating of the film to a temperature at which plastic elongation of the film yet does not occur, is done by first IR heaters 20 and 21 disposed symmetrically at both sides of the downward film path. The stretch-heating of the film is done by second IR heaters 22 and 23 that are capable of creating an asymmetric heating of the film. The heater 22 of the second IR heaters comprises 8 parallelly spaced lamps and the heater 23 of the second IR heaters comprise 5 parallelly spaced IR lamps.

### PRIOR ART DOCUMENTS

### PATENT DOCUMENTS

Patent Document 1: JP-A-50-114476 (pp. 1 to 4)
Patent Document 2: JP-B-3-56889 (pp. 1 to 3)
Patent Document 3: JP-A-2008-93946 (pp. 1 to 3)
Patent Document 4: JP-A-2010-167767 (p. 3 and pp. 14 to 15)
Patent Document 5: EP-A-0 299 560

### SUMMARY OF THE INVENTION

### PROBLEMS TO BE SOLVED BY THE INVENTION

In many cases, about a film for optical articles, its film substrate has a structure having substantially no particles or a structure close to having no particles in order to exhibit an excellent transparency. As a result, in order to make the surface of the film smooth, the film is heated to the glass transition temperature thereof or higher on rolls as described in Patent Document 1 or 2, whereby the following are caused: the film surface adheres onto the roll; the film is lengthwise stretched just after the film is separated from the rolls; and an alien substance adhering onto the roll surface or the surface form of the rolls is thermally transcripted to the film. Thus, there is caused a problem that many scratches are generated on the film surface.

According to the method of Patent Document 3 or 4, a film is locally heated between rolls so that a stretch starting position is set between the rolls. Thus, it is said that the film is not lengthwise stretched from the time just after the film is separated from the rolls.

However, according to Patent Document 3, when the preliminary heating temperature of the film is lowered to prevent the generation of scratches that is based on the adhesion of the film onto the low-speed rolls, heat quantity required when the film is stretched becomes short so that the film is unevenly stretched in the longitudinal direction. Thus, the film unfavorably suffers from thickness unevenness in the longitudinal direction. When heat quantity from the locally and rapidly heating means between the rolls is raised in order to compensate the shortage, rolls around the means are also warmed. As a result, an alien substance adhering onto the surface of the rolls or the roll surface form is thermally transcripted to the film.

According to Patent Document 4, no problem is generally caused when the film that has not yet been lengthwise stretched is a thick film, which has a thickness of 2000 µm or more provided that this situation depends on conditions for the lengthwise stretching, or the composition of the raw material resin. However, about any thin film having a thickness less than 200 µm, the film is wrinkled in the film longitudinal direction by tension related to lengthwise stretching. Moreover, a region of the film near the edge thereof, this region being larger in film thickness, is undulated so that the stretch starting position is not determined. Thus, the film becomes uneven in thickness along the width direction thereof.

In light of the situation, the present invention has been made, and an object thereof is to provide a method for stretching a thermoplastic resin film which is excellent in thickness evenness in the longitudinal direction, which may be referred to as the lengthwise direction, and the width direction thereof and is unlikable to suffer from scratches such as adhesion scratches caused by a roll, and transcription scratches so as to be used suitably, particularly, for optical articles.

### SOLUTIONS TO THE PROBLEMS

In order to solve the problems, the invention is as follows:
(1) A method for stretching a film in the longitudinal direction thereof by a difference in circumferential speed between front and rear rolls, wherein photo-concentration heaters, capable of converging infrared diffused light from an infrared heater partially or entirely, are used to radiate infrared rays onto the film from above the film and below the film, and when "a" represents the irradiated-area length in the longitudinal direction of an area of the film that is irradiated with converged light of the infrared rays radiated from above the film and "b" represents the irradiated-area length in the longitudinal direction of an area of the film that is irradiated with converged light of the infrared rays radiated from below the film, the area corresponding to a and the area corresponding to b overlap with each other, and a and b are each 10 mm or more and 40 mm or less.
(2) The method for stretching a film according to item (1), wherein when "A" represents the distance from the lower end of a housing of the photo-concentration heater above the film to one of both surfaces of the film, and "B" represents the distance from the upper end of a housing of the photo-concentration heater below the film to the other surface of the film, A and B are each 10 mm or more and 30 mm or less.
(3) The method for stretching a film according to item (1) or (2), wherein lengths a and b are each 25 mm or more and 40 mm or less.
(4) The method for stretching a film according to any one of items (1) to (3), wherein in the longitudinal direction, the central position of the area having the irradiated-area length a is consistent with that of the area having the irradiated-area length b, and these areas a and b are equal to each other.
(5) The method for stretching a film according to any one of items (2) to (4), wherein A is equal to B.
(6) The method for stretching a film according to any one of items (1) to (5), wherein the output power of the photo-concentration heater above the film is 1.2 times or more and 3.0 times or less that of the photo-concentration heater below the film.
(7) The method for stretching a film according to any one of items (1) to (6), wherein before the film is stretched in the longitudinal direction, the film has a thickness of 300 µm or more and 3000 µm or less.
(8) The method for stretching a film according to any one of items (1) to (7), wherein the draw ratio of the film is 2 or more and 4 or less in the longitudinal direction.
(9) The method for stretching a film according to any one of items (1) to (8), comprising the step of heating the film preliminarily before the film is stretched by the difference in circumferential speed between the front and rear rolls, the heating temperature for the preliminary heating is [the glass transition temperature of the film - 15] °C or more and [the glass transition temperature of the film - 5]°C or less.
(10) A method for producing a film, using the film stretching method recited in any one of items (1) to (9).

### EFFECTS OF THE INVENTION

According to the method of the invention, a film can be obtained which is excellent in thickness evenness in the longitudinal direction and the width direction and is unlikable to suffer from scratches such as an adhesion scratch and a transcription scratch so as to be used suitably, particularly, for optical articles. By laying an easily bondable layer onto a surface of the lengthwise stretched film, or stretching the film laterally to be biaxially stretched, the film is usable suitably for a base film of a prism sheet, an antireflective film, a hard coat film, a light diffusion plate or some other, a base film of a near infrared ray absorption film or electromagnetic wave absorption film used as a front plate of a plasma display, or a base film of a touch panel or a transparent conductive film.

### BRIEF DESCRIPTION OF THE DRAWINGS

Fig. 1 is a schematic sectional view of a roll stretching machine according to an embodiment of the invention.
Fig. 2 is an enlarged schematic sectional view of an inter-roll stretching region in Fig. 1.

### EMBODIMENTS FOR CARRYING OUT THE INVENTION

Examples of the thermoplastic resin constituting a film to which the invention is applicable include polyolefin resins such as polyethylene, polypropylene and polymethylpentene, polyamide resins such as nylon 6 and nylon 66, polyester resins such as polyethylene terephthalate (hereinafter, the polymer may be abbreviated to PET; the same notation rule is to be applied to a description in any parenthesis pair in the following), polybutylene terephthalate (PBT), polyethylene-2,6-naphthalate (PEN), polybutylene naphthalate (PBN), polytrimethylene terephthalate (PPT), polyethylene-p-oxybenzoate and poly-1,4-cyclohexylenedimethylene terephthalate (PCT), polycarbonate resins, and polyester resins each obtained by copolymerizing polyethylene terephthalate or the like with a copolymerizable component, for example, a diol component such as diethylene glycol, neopentyl glycol or polyalkylene glycol, or a dicarboxylic acid such as adipic acid, sebacic acid, phthalic acid, isophthalic acid or 2,6-naphthalane dicarboxylic acid; and include polyacetal resins, and polyphenylene sulfide resins. The thermoplastic resin is favorably usable for optical articles for each of which a strict control of retardation or thickness evenness is required. The invention also produces an advantageous effect for lengthwise stretching of a film containing, as a constituent component thereof, an amorphous resin, such as a polycarbonate resin, a polyolefin resin, a cyclic polyolefin resin, or a polyacrylic resin.

As the method for polymerization for PET, any method is usable. Examples thereof include a direct polymerization method of causing terephthalic acid and ethylene glycol, and optionally any other dicarboxylic acid component and any other diol component to react directly with each other; and a transesterification method of subjecting a dimethyl ester of terephthalic acid (and optionally a methyl ester of any other dicarboxylic acid component) and ethylene glycol (and optionally any other diol component) to transesterification reaction.

The invention is applicable to a melt film-producing method from the viewpoint of costs and producing performance. The melt film-producing method can be classified into straight die, cross head die, flat die and special die methods in accordance with the shape of a die used therein. It is preferred to use the stretching method of the invention in the film-producing method based on the flat die method. When a raw material resin is melt-extruded, it is preferred to dry the resin material, using a drier such as a hopper drier or a paddle drier, or a vacuum drier. After the resin material is dried in this way, the resin is melted by means of, for example, a melt extruder and the melted resin are weighed in a gear pump. The weighed fractions are continuously sent to a die. The die needs only to be designed in such a manner that the melted resin does not remain long in the die. In the flat die method, the die may be any one selected from a manifold die, a coat hanger die, and fish tail die, which are ordinarily used. The melted resin extruded out into a sheet form from the die is cooled and solidified on a cooling medium such as a drum. In this way, a film can be obtained. In the melt film-producing method based on the flat die method, a predetermined film thickness can be obtained by adjusting the extrusion temperature, the film pulling/taking-up speed when the film is pulled and taken up, and the dimension of a lip gap in the die.

The thickness of a film to which the stretching method of the invention is applied is appropriately selected in accordance with a purpose thereof. In general, before the film is lengthwise stretched (before the film is stretched in the longitudinal direction), the thickness of the film ranges preferably of 10 µm or more and 3000 µm or less, more preferably of 300 µm or more and 3000 µm or less. If the thickness of the film is less than 10 µm, the yield thereof may be deteriorated, for example, for the following reason: the film is easily broken when lengthwise stretched. If the thickness is more than 3000 µm, the film is lowered in transparency or becomes excessively large in thickness for functioning as a member. Furthermore, if the film has a thickness less than 300 µm, the film is more remarkably wrinkled in the longitudinal direction with ease by tension applied thereto when lengthwise stretched, or by width direction shrinkage of the film near the film edge, this phenomenon being dependent on conditions for the lengthwise stretching and the composition of the thermoplastic resin. However, when the film has a thickness more than 2000 µm, the film is hardly wrinkled in the longitudinal direction. Thus, the film can also be lengthwise stretched by a conventional method, as described in Patent Document 4.

Before the film is lengthwise stretched, the thickness unevenness of the film in any direction is preferably 2.5% or less of the film thickness. When the film thickness is, for example, 1500 µm, the thickness unevenness in each of the longitudinal direction and the width direction is desirably 37.5 µm or less. This is based on the following: when the film is lengthwise stretched, its regions small in thickness are locally lengthwise stretched, dependently on the shape or spots of the thickness unevenness, so that the film is easily wrinkled in the longitudinal direction.

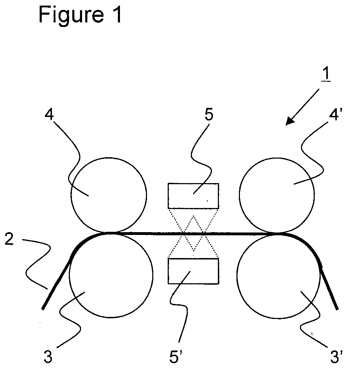

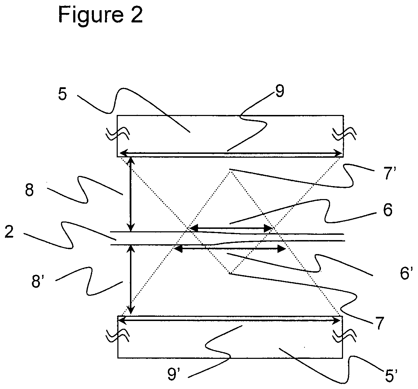

The following describes the invention with reference to Figs. 1 and 2. Fig. 1 is a schematic sectional view of a roll stretching machine 1 in a film lengthwise stretching method. In the roll stretching machine 1, from the upstream side of the advancing direction (longitudinal direction) of a film 2, a low-speed roll 3, and a high-speed roll 3' are arranged in turn. The rolls 3 and 3' have nip rolls 4 and 4', respectively, for nipping the film 2. Between the rolls 3 and 3', photo-concentration heaters, as well as respective housings 5 and 5' therefor, are arranged above and below the film 2, respectively. Fig. 2 is an enlarged schematic sectional view of an inter-roll stretching region. The irradiated-area length in the longitudinal direction of an area of the film that is irradiated with converged light of infrared rays radiated from the photo-concentration heater above the film 2 in the inter-roll stretching region, i.e., the length 6 is decided by a focus 7 of this upper photo-concentration heater, and the distance from the lower end of the housing 5 of the upper photo-concentration heater to the upper surface of the film 2 that is in a state before the film 2 is stretched, i.e., the distance 8. About these, a similar relationship is satisfied between two triangles each having, as their top point, the focus 7 and having, as their bases, the irradiated-area length 6 and the irradiated-area width 9 of the lower end of the housing, i.e., the width 9, respectively. Thus, the irradiated-area length 6 is decided by a relationship of [the irradiated-area length 6] = [the irradiated-area width 9] × (1 - [the length 8] / [the distance from the lower end of the housing 5 to the focus 7]). Similarly, the irradiated-area length in the longitudinal direction of an area of the film that is irradiated with converged light of infrared rays radiated from the photo-concentration heater below the film 2, i.e., the length 6' is decided by a focus 7' of this lower photo-concentration heater, and the distance from the upper end of the housing 5' of the lower photo-concentration heater to the lower surface of the film 2 that is in a state before the film 2 is stretched, i.e., the distance 8'. About these, a similar relationship is satisfied between two triangles each having, as their top point, the focus 7' and having, as their bases, the irradiated-area length 6' and the irradiated-area width of the upper end of the housing, i.e., the width 9', respectively. Thus, the irradiated-area length 6' is decided by a relationship of [the irradiated-area length 6'] = [the irradiated-area width 9'] × (1 - [the length 8'] / [the distance from the lower end of the housing 5' to the focus 7']). The areas having the irradiated-area lengths 6 and 6', respectively, have an overlapping portion on the film. In this case, the "overlapping portion" denotes the following portion when light radiated onto one of both the surfaces of the film from the upper photo-concentration heater is projected, as it is, onto the other surface where the projected light overlaps with light radiated from the lower photo-concentration heater.

It is desired to set the focus 7 or 7' of either one of the photo-concentration heaters not to be positioned inside the housing of the other photo-concentration heater at the side opposite to the former photo-concentration heater across the film. If the focus is positioned inside the housing of the other photo-concentration heater, an infrared heater body, electric equipment therefor, and others inside the housing turn locally to a high temperature so that the temperatures thereof exceed the heat-resistance temperatures thereof. As a result, these members are shortened in lifespan, and break down. As far as there is not an especial motive, the focus is set onto an extended line from the central point in the film longitudinal direction of the photo-concentration heater. This manner makes it possible to restrain a scattering of infrared rays into the surroundings into a minimum level.

First, the film that has been melt-extruded from the die and then, for example, cooled/solidified on the cooling drum, is preliminarily heated by, for example, a preliminarily heating roll, hot wind, or an infrared heater, before the film is lengthwise stretched. Thereafter, the film is lengthwise stretched between the low-speed roll and the high -speed roll to which circumferential speed difference or tension difference is applied while the film is irradiated, from above and below the film, with infrared rays from the photo-concentration heaters. In order to prevent the film from slipping onto each of the rolls, it is preferred that as illustrated in Fig. 1, the tension is cut, for example, by nipping the low-speed roll 3 and the high-speed roll 3' with nip rolls 4 and 4' , respectively. The place for performing the lengthwise stretching step is not limited to one zone. For example, between the low-speed roll and the high-speed roll, a roll having a middle speed may be arranged to produce a circumferential speed difference so that multistage stretching may be attained.

When the film obtained by the invention is applied to an optical article, the film is required to have no scratches. However, in a case where the film contacts any one of the rolls when an actual stretch processing is generated, the surface of the film is scratched. Thus, in the actual stretch processing, the film should be heated to the glass transition temperature, or higher between the non-contacting rolls. For this reason, the temperature for the preliminary heating is adjusted to a temperature equal to or lower than the glass transition temperature of the thermoplastic resin constituting the film. However, the preliminary heating cannot be effectively attained at a considerably low temperature, thus, the temperature should be made somewhat high. Even when the preliminary heating temperature is the glass transition temperature or lower, the film surface may adhere onto the low-speed roll. In this case, fine scratches or scratches are generated in the film when the film is peeled off from the roll. For this reason, the preliminary heating temperature ranges preferably of [the glass transition temperature of the film - 20]°C or higher and [the film glass transition temperature]°C or lower, more preferably of [the glass transition temperature of the film - 15]°C or higher [the glass transition temperature of the film - 5]°C or lower.

The lengthwise-stretched film is carried through a group of cooled high-speed rolls, or passed through a cooling oven to be cooled to the glass transition temperature or lower. When the film is carried during this cooling time in the state that the temperature of the film is higher than the glass transition temperature, the film is lengthwise stretched on the high-speed rolls so as to be scratched. When the film is lengthwise stretched on the cooling oven, the film becomes uneven in thickness. It is therefore preferred to cool the film as rapidly as possible.

The rolls are each preferably, for example, a stainless steel roll, an iron roll, a metallic roll in which such a roll is plated, a rubbery roll in which a metallic core is coated with a rubber, or a ceramic roll in which a metallic core is coated with a ceramic material. The following heating method is also preferred, for example, passing heated steam, hot water or a hot medium through hollow inner part of core metal or to the inside to heat the film, the manner of laying heating wires into a roll to heat the film, or the manner of using electromagnetic waves to heat the film by induction heating.

The photo-concentration heaters used in the stretching method of the invention each have an infrared heater inside a housing made of, for example, a metal for light concentration and thermal insulation. The wavelengths of the infrared heater are appropriately selected from the range of short wavelengths to middle wavelengths (of 0.8 µm or more and 3.0 µm or less) in accordance with the absorption efficiency of the thermoplastic resin constituting the film, or a required heat quantity. Since a light ray has an energy corresponding to the vibration number (the inverse number of the wavelength) thereof, a light ray shorter in wavelength has a higher energy. Thus, when the absorption efficiency of the thermoplastic resin does not vary largely in the above mentioned wavelength range of 0.8 µm or more and 3.0 µm or less, a higher energy density can be gained by selecting short wavelengths (of 0.8 µm or more and 2.0 µm or less).

The total output power of the infrared heaters is appropriately selected in accordance with the infrared ray absorption efficiency of the thermoplastic resin constituting the film, the preliminary heating temperature, and stretching conditions such as the draw ratio. For example, infrared heaters (manufactured by Hybec Corporation) giving a wavelength of 1.1 µm are set inside respective photo-concentration heater housings above and below the film, and the total electric power of the infrared heaters that is required for stretching thermoplastic resin is selected preferably from the range of 10 Wh/kg or more and 23 Wh/kg or less, more preferably from that of 12 Wh/kg or more and 21 Wh/kg or less per unit weight (kg) of the thermoplastic resin. If the total electric power of the infrared heaters is less than 10 Wh/kg, the heat quantity necessary for the stretching becomes insufficient unless the preliminary heating temperature is set to the glass transition temperature of the thermoplastic resin or higher. Thus, scratches, such as adhesion scratches caused by the roll or transcription scratches, are generated. If the power is higher than 23 Wh/kg, the film is turned closely to the so-called super drawn state, which is a state that the film can be stretched but is not changed in molecular orientation. Thus, the film cannot gain required physical properties.

The output power of each of the infrared heaters above and below the film is appropriately selected in accordance with the structure of the roll stretching machine, conditions for producing the film, and others. In the case of using, for example, a roll stretching machine as illustrated in Figs. 1 and 2, which is composed of a pair of rolls made of metal and each equipped with a nip roll coated with a silicone rubber, the lower film surface of the film is heated by the low-speed roll just before the inter-roll stretching region. It is therefore preferred that the output power of the infrared heater above the film is higher than that of the infrared heater below the film. Respective heat quantities which the film receives from both surfaces thereof are made nearer to each other, so that the film can be evenly stretched. Thus, the film can be made smaller in thickness unevenness. Furthermore, surface form transcription scratches caused by the rolls are more easily generated, in particular, by the nip rolls out of them. Thus, in order to restrain the nip rolls from being heated by film-transmitted light from the infrared heater below the film, about the output power of each of the infrared heaters above and below the film, it is preferred that the output power of the infrared heater above the film, which is equipped with the nip rolls, is 1.2 times or more and 3.0 times or less that of the infrared heater below the film. If the ratio between the respective output powers of the infrared heaters above and below the film is more than 3.0, a large difference is generated between the respective heat quantities which the film receives from both the surfaces thereof. Thus, the film is stretched to be easily made uneven in thickness.

The photo-concentration heaters are arranged above and below the film, respectively, between the rolls, and along the film width direction. The position where each of the heaters is set in the film longitudinal direction is appropriately selected, correspondingly to the longitudinal drawing process. In order to locate an actual stretch starting position between the rolls, the respective positions of the photo-concentration heaters are preferably near the center of the space between the rolls. In order to stabilize the stretch starting position, it is preferred that the respective central positions, in the film longitudinal direction of the photo-concentration heaters above and below the film are consistent with each other.

When "A" represents the distance from the lower end of the housing of the photo-concentration heater above the film to one of both the surfaces of the film, and "B" represents the distance from the upper end of the housing of the photo-concentration heater below the film to the other surface of the film, A and B are each preferably 10 mm or more and 30 mm or less, and are each more preferably 10 mm or more and 30 mm or less and are equal to each other. If the distances A and B are each smaller than 10 mm, the film easily contacts the housings when wrinkled or undulated in the film longitudinal direction. Thus, film scratches are generated or when the level of the contact is large, the film is broken. Reversely, if the distances A and B are each larger than 30 mm, the infrared rays leak out to the surroundings so that the peripheral rolls or members are heated. Thus, the film adheres onto the rolls or is thermally transcripted thereon, so that film scratches are generated. When the distances A and B are equal to each other, the film-heating by the infrared rays from above the film is equalized to that by the infrared rays from below the film, so that the stretch starting position can be made more stable.

Furthermore, it is preferred to locate, inside the housing of each of the photo-concentration heaters, a reflector against infrared rays behind the infrared heater and/or beside the infrared heater, so that the reflected light can be concentrated to the focus. The focus is generated at an intersection point of rays generated by a matter that light from its light source is reflected in such a manner that the incident angle and the reflection angle thereof to the reflector are equal to each other. The reflector not only concentrates reflected light of the infrared heater but also causes transmitted infrared rays from the other infrared heater, which is set at the side opposite to the former heater across the film, to be again reflected inside the housing, so that the reflector can contribute to the heating of the film. It is therefore possible to prevent bad effects based on the leakage of the infrared rays to the surroundings, in particular, the generation of adhesion scratches or transcription scratches resulting from the heating of the low-speed roll or the nip rolls . Furthermore, it is possible to heat the film efficiently by a smaller energy since the present heater-set state results in a smaller infrared ray loss than a conventional state that an infrared heater is set only at one (mainly, the upper side) of the two film surface sides. In other words, the output powers of the heaters can have a margin, so that the invention can cope with a higher-speed lengthwise stretching than any conventional lengthwise stretching so as to increase the productivity of films.

The photo-concentration heaters referred to in the invention are each a unit which has an infrared heater inside a housing made of, for example, a metal for light concentration or thermal insulation, and which is capable of converging infrared diffused light (also referred to diffused light hereinafter) from the infrared heater partially or entirely, more preferably capable of converging diffused light partially. More preferred is, for example, a state that only reflected light of infrared rays is converged by the reflector set inside the housing, that is, a state that diffused light of infrared rays is mingled with converged light thereof. The diffused light makes it possible to heat the film preliminarily between the rolls. Thus, the stretch starting position can be made more stable in the scope that the film is heated by the converged light.

When "a" represents the irradiated-area length in the longitudinal direction of an area of the film that is irradiated with converged light of infrared rays radiated from above the film and "b" represents the irradiated-area length in the longitudinal direction of an area of the film that is irradiated with converged light of infrared rays radiated from below the film, a portion where the area having the irradiated-area length a and the area having the irradiated-area length b overlap with each other is the highest in energy density per unit area. Thus, by selecting the output powers of the photo-concentration heaters to render this portion the stretch starting position of the film, the stretch starting position can be stabilized. Reversely, if the area having the irradiated-area length a and the area having the irradiated-area length b do not overlap with each other, the stretch starting position of the film is not stabilized. Accordingly, the film undergoes stretch unevenness in the longitudinal direction to be made largely uneven in thickness. It is therefore necessary that the area having the irradiated-area length a and the area having the irradiated-area length b overlap with each other. The wording "the area having the irradiated-area length a and the area having the irradiated-area length b overlap with each other" denotes that when light radiated onto one of both the surfaces of the film from the photo-concentration heater above the film is projected, as it is, onto the other surface of the film, there is a portion where the projected light overlaps with light radiated from the photo-concentration heater below the film.

As far as the area having the irradiated-area length a overlaps with the area having the irradiated-area length b, the central position of the irradiated-area length a may be different from that of the irradiated-area length b in the longitudinal direction. When the area having the length a is not consistent with the area having the length b but these areas overlap partially with each other, the wording "the area having the irradiated-area length a and the area having the irradiated-area length b overlap with each other" denotes that the area having the length a (or b) is included in the area having the length b (or a). Preferably, the central position of the photo-concentration heater above the film is consistent with that of the photo-concentration heater below the film in the longitudinal direction. When focuses are each set on an extended line from the central position of one of the photo-concentration heaters, it is most preferred that this central position consistency is satisfied and further the central position of the area having the irradiated-area length a is consistent with that of the area having the irradiated-area length b in the longitudinal direction, and these areas a and b are equal to each other.

The irradiated-area lengths a and b are each preferably 10 mm or more and 40 mm or less, more preferably 25 mm or more and 40 mm or less. In order to make the stretch starting position most stably, the lengths a and b are each 30 mm or more and 40 mm or less. Conventionally, it is considered that when the irradiated-area lengths are each smaller than 10 mm, the stretch starting position of the film is more stable. However, when a film has a thickness smaller than 2000 µm before lengthwise stretched, the film is generally wrinkled or undulated with ease in the film longitudinal direction because of tension applied thereto when lengthwise stretched or a film width direction shrinkage near the film edge, this situation being dependent on conditions for the lengthwise stretching, and the thermoplastic resin constituting the film. By the wrinkle or undulation, the irradiated-area length of the film is not stabilized so that the stretch starting position is not stabilized. A case where the stretch starting position is further stabilized even when the film is wrinkled or undulated is a case where each of the irradiated-area lengths is 25 mm or more and 40 mm or less. If the irradiated-area length is larger than 40 mm, the stretch starting position moves in an area having the irradiated-area length to be made unstable. Thus, the film undergoes stretch unevenness to be made uneven in thickness.

The housing width in the film longitudinal direction of each of the photo-concentration heaters is appropriately selected in accordance with the maximum output power of its infrared heater. When the housing widths above and below the film are different from each other, it is preferred that the upper housing width is larger that of the lower housing width in order that infrared rays can be caused not to leak to the side above the film to restrain the rolls above the film and peripheral members from being heated by the infrared rays. Reversely, it is preferred that the lower housing width is larger than the upper housing width to restrain the rolls and members below the film from being heated by infrared rays. It is more preferred that the housing width above the film is equal to that below the film. In this case, the leakage of infrared rays can be made smaller.

It is also preferred that the housing part of each of the photo-concentration heater has a structure that can be cooled by passing cooled air or water to the inside thereof. This manner makes it possible to prevent a shortage in the respective lifespans of the infrared heater inside the housing, and electric equipment therefore, as well as fails thereof, the shortage and fails being based on a matter that the temperatures thereof exceed the heat resistance temperatures thereof. This manner also makes it possible to prevent a matter that the housing itself functions as a heating source to warm the peripheral rolls and members.

In the invention, the longitudinal draw ratio is appropriately selected correspondingly to a purpose to be attained. In general, in order to improve the film in toughness or flexibility, the ratio is set to 1.2 times or more. In order to cause the film to exhibit strength or retardant, the ratio is selected from the range of 1.5 times to 4 times. The speed of each of the rolls is appropriately selected in accordance with the purpose, the size of the facilities, the kind of the used thermoplastic resin, and others. Before the film is stretched, the speed for carrying the film is generally from 1 to 50 m/min.

### EXAMPLES

Hereinafter, the invention will be described by way of working examples. However, the invention is not limited to the following examples. Before respective descriptions about the examples, a description is made about a method adopted in the examples for measuring each physical property.

### (1) Glass transition temperature (Tg)

A sample (film) is weighed into about 5 mg. A differential scanning calorimeter (RDC 220 model, manufactured by Seiko Instruments Inc.) is used to measure the sample at a temperature raising rate of 20°C/min in the range of 25°C to 200°C in the atmosphere of nitrogen. The glass transition temperature is decided on the basis of a result measured from a first scanning run. The method for gaining the glass transition temperature is according to a method for gaining middle point glass transition temperature in item 9.3 of JIS-K-7121 (1987). The glass transition temperature is defined as a point where a straight line apart by an equal distance in the vertical line direction from a straight line extended from each base line in a measured chart crosses a curved line of a stepwise change moiety of the glass transition temperature. When plural stepwise change moieties are present, lower one out of values in the measurement range is adopted.

### (2) Average thickness of film

A digital micrometer MDC-25MJ (manufactured by Mitsutoyo Corporation) is used to measure the respective thicknesses at 10 points of a film along the width direction thereof before or after the film is lengthwise stretched. These points are located in a width direction area of the film that does not include both ends in the width direction of the film that each has a length of 100 mm in order to exclude any effect of edge regions of the film. The average value thereof is defined as the "average thickness of the film" (figures after the decimal fractions are rounded off).

### (3) Thickness unevenness of film

Before or after lengthwise stretched, a film is cut out into a width of 50 mm in each of the longitudinal direction and the width direction thereof. While the film is caused to run at a speed of 1.5 m/min under a measurement pressure load of 0.15 g by means of a device, "FILM SYNNEX", manufactured by Anritsu Corp., the thickness is continuously measured to gain a "difference between the maximum value and the minimum value" of a thickness chart thereof in each of the longitudinal and width directions. In the longitudinal direction, the chart is gained in a range of the film that has a length of 1 mm. In the width direction, the chart is gained in a width direction range of the film that does not include both ends thereof that each has a length of 100 mm. In each of the longitudinal and width directions, the thickness unevenness R (%) is calculated by dividing the "difference between the maximum value and the minimum value" by the "average thickness of the film".
In a case where the film has a thickness unevenness of 2.4% or less in each of the longitudinal direction and the width direction after lengthwise stretched, the film is judged to be good in thickness evenness.

### (4) Average surface roughness

When the surface form of a roll such as a nip roll is thermally transcripted onto a film, the film surface roughness is changed. Thus, a three-dimensional surface roughness meter (ET4000AK, manufactured by Kosaka Laboratory Ltd.) is used to measure a film by a tracer method under conditions described below. The surface roughness thereof represents the average value of the absolute values each obtained by subtracting the height of a rough curved surface from the height of the central surface of the rough curved surfaces. In the invention, the surface roughness, SRa, is the average value of respective surface roughness of both the surfaces of the film.

| | |
|---|---|
| Probe diameter | 2 (µmR) |
| Probe pressure | 10 (mg) |
| Measurement length | 500 (µm) |
| Lengthwise magnifications | 20000 (magnifications) |
| Cutting-off | 250 (µm) |
| Measurement speed | 100 (µm/s) |
| Measurement interval | 5 (µm) |
| The number of records | 80 |
| Hysteresis width | ±6.25 (nm) |
| Standard area | 0.1(mm²) |

In the case of observing a film of a thermoplastic resin which does not substantially contain added particles in a dark room with the naked eye, using a video light ("VL-G301", manufactured by LPL Co., Ltd.), which is a strong light source, it can be perceived that the surface form of a roll is transcripted when the SRa of the film is 4.0 nm or more. When the SRa is 4.0 nm or more, the film is judged to be bad about the surface form transcription.

### (5) Measurement of scratches of a film

The video light ("VL-G301", manufactured by LPL Co., Ltd.), which is a strong light source is used to observe a stretched film over a length of 10 m in the longitudinal direction in the dark room. In this way, scratches therein are detected. On the basis of a matter that scratches caused by a roll have a periodic pitch, the number of series of scratches generated by a low-speed roll, that is, a preliminary heating roll is counted. When the film has no scratches, the film is acceptable. When the film has one or more scratch series, the film is not acceptable.

### (Example 1)

As a thermoplastic resin, polyethylene terephthalate (PET) pellets were used which had an intrinsic viscosity of 0.65 dl/g and a Tg of 80°C and neither contained internal particles based on a polymerization catalyst residue and others, nor inactive particles as much as possible. The pellets were sufficiently dried. Without adding any additive particles thereto, a single screw extruder was then used to extrude the single material at 285°C. Through a gear pump, an amount thereof to be extruded out was made constant, and then the material was extruded out from a flat die having a width of 1000 mm into a sheet form, thus yielding a film having an average thickness of 1500 µm, a density of 1.34 g/cm³, and respective thicknesses unevenness of 2.4 to 2.5% in the longitudinal direction and the width directions. Subsequently, between a pair of rolls made of a metal, having a diameter of 250 mm and equipped with nip rolls each having a diameter of 250 mm and coated with a silicone rubber (rubber hardness: 60 degrees) as illustrated in Figs. 1 and 2, photo-concentration heaters ("near infrared line heaters: HYL-1000" manufactured by Hybec Corporation) each having an infrared heater giving a wavelength of 1.1 µm (600 V, and 24 kW/m) and a reflector against infrared rays were arranged above and below the film, respectively, to make the respective central positions of the heaters consistent with each other in the film longitudinal direction. The irradiated-area lengths a and b in the film longitudinal direction of respective areas of the film that was irradiated with converged light of the infrared rays were each 30 mm, and these areas overlapped with each other over 30 mm. The distances A and B, which were each a distance between a housing of one of the photo-concentration heaters and one of the surfaces of the film, were each set to 20 mm. A roll stretching machine having this structure was used. Before stretched, the film was preliminarily heated on a group of 10 rolls made of a metal and having a diameter of 250 mm at a roll temperature of 70°C and a carrying speed of 10 m/min. Thereafter, the film was lengthwise stretched at a draw ratio of 3.0 in the longitudinal direction while a total electric power of 20 kW was applied to the photo-concentration heaters, related to the invention, above and below the film (the upper heater: 13 kW; and the lower heater: 7 kW). Thereafter, on a group of 5 rolls made of a metal and having a diameter of 250 mm, the film was cooled at a roll temperature of 25°C to yield a lengthwise stretched film. Various conditions are shown in Table 1. About the lengthwise stretched film thus yielded, in Table 2 are shown respective results obtained by measuring the average thickness, the thickness unevenness, the average surface roughness, and the number of preliminary heating roll scratches . The thickness unevenness was 2.4% or less in each of the longitudinal direction and the width directions. Thus, the thickness evenness was made better than that of the film that had not yet been stretched. The average surface roughness was 4 nm or less. Thus, the obtained film had no transcripted of the roll surface form. Moreover, the film was a film having no scratches based on the preliminary heating roll.

### (Comparative Example 1)

A lengthwise stretched film was yielded in the same way as in Example 1 except that one of the photo-concentration heaters was arranged only above the film, and the preliminary heating roll and the total of the infrared heater were set to 80°C and 15 kW, respectively. Various conditions are shown in Table 1, and results of the various measurements are shown in Table 2. The heat quantity necessary for the stretching was supplemented by the preliminary heating. As a result, preliminary heating roll scratches were generated, which resulted from the adhesion of the film onto the preliminary heating roll.

### (Comparative Example 2)

A lengthwise stretched film was yielded in the same way as in Example 1 except that one of the photo-concentration heaters was arranged only above the film, and the total electric power of the infrared heater was set to 24 kW. Various conditions are shown in Table 1, and results of the various measurements are shown in Table 2. The heat quantity necessary for the stretching was supplemented by the preliminary heating, and further no photo-concentration heater was arranged below the film, so that the leakage of the infrared rays to the surroundings was increased, thus warming the peripheral rolls and members to generate adhesion scratches based on the preliminary heating roll, and transcription scratches based on the nip roll surface form.

### (Comparative Example 3)

A lengthwise stretched film was yielded in the same way as in Example 1 except that about the infrared heaters above and below the film, no reflector against infrared rays, and no focus were set so that the infrared heaters emitted only diffused light; and the temperature of the preliminary heating roll and the total electric power of the infrared heaters were set to 80°C and 20 kW (the upper heater: 13 kW; and the lower heater: 7 kW), respectively. Various conditions are shown in Table 1, and results of the various measurements are shown in Table 2. The stretch starting position was not fixed so that the film was made worse in thickness unevenness than the film that had not yet been stretched. The heat quantity necessary for the stretching was supplemented by the preliminary heating, so that preliminary heating roll scratches were generated, which resulted from the adhesion of the film onto the preliminary heating roll. Furthermore, the leakage of the infrared rays to the surroundings was increased, thus warming the peripheral rolls and members to generate transcription scratches based on the nip roll surface form.

### (Comparative Example 4)

A lengthwise stretched film was yielded in the same way as in Example 1 except that about the infrared heaters above and below the film, no reflector against infrared rays, and no focus were set so that the infrared heaters emitted only diffused light; and the total electric power of the infrared heaters was set to 25 kW (the upper heater: 17 kW; and the lower heater: 8 kW). Various conditions are shown in Table 1, and results of the various measurements are shown in Table 2. In the same manner as in Comparative Example 3, the stretch starting position was not fixed so that the film was made worse in thickness unevenness than the film that had not yet been stretched. The heat quantity necessary for the stretching was supplemented by the preliminary heating, so that the leakage of the infrared rays to the surroundings was increased, thus warming the peripheral rolls and members to generate adhesion scratches based on the preliminary heating roll, and transcription scratches based on the nip roll surface form.

### (Comparative Example 5)

A lengthwise stretched film was yielded in the same way as in Example 1 except that the respective central positions in the longitudinal direction of the photo-concentration heaters above and below the film and the housings thereof were shifted by 20 mm to cause the area having the irradiated-area length a not to overlap with the area having the irradiated-area length b in the film; and the total electric power of the infrared heaters was set to 25 kW (the upper heater: 17 kW; and the lower heater: 8 kW). Various conditions are shown in Table 1, and results of the various measurements are shown in Table 2. The stretch starting position was not fixed in the scope extending over the film-heated length so that the film was made worse in thickness unevenness than the film that had not yet been stretched. Since the central positions of the housings were shifted, the leakage of the infrared rays to the surroundings was increased, thus warming the peripheral rolls and members to generate adhesion scratches based on the preliminary heating roll.

### (Example 2)

A lengthwise stretched film was yielded in the same way as in Example 1 except that before the film was stretched, the average thickness thereof was 300 µm and the carrying speed was 50 m/min, and the preliminary heating temperature was 75°C. Various conditions are shown in Table 1, and results of the various measurements are shown in Table 2. The obtained stretched film was a film which was excellent in thickness evenness in the longitudinal direction and the width direction and which scarcely had scratches, such as adhesion scratches and transcription scratches based on the rolls.

### (Example 3)

A lengthwise stretched film was yielded in the same way as in Example 1 except that before the film was stretched, the average thickness thereof was 3000 µm and the carrying speed was 5 m/min, and the preliminary heating temperature was 65°C. Various conditions are shown in Table 1, and results of the various measurements are shown in Table 2. The obtained stretched film was a film which was excellent in thickness evenness in the longitudinal direction and the width direction and which scarcely had scratches, such as adhesion scratches and transcription scratches based on the rolls.

### (Examples 4 to 17)

Each lengthwise stretched film was yielded in the same way as in Example 1 except that the irradiated-area lengths a and b were each from 10 to 40 mm, and the area having the length a and that having the length b overlapped with each other over a length of 10 to 40 mm. Various conditions are shown in Table 1, and results of the various measurements are shown in Table 2. The stretched film was made worse in thickness unevenness in both of the longitudinal direction and the width direction than Example 1, but was made better therein than the film that had not yet been stretched. In particular, in Examples 12, 13, 16, and 17, in which the irradiated-area lengths a and b were from 25 to 40 mm, the thickness unevenness was 2.0% or less. Thus, these examples were made better in thickness evenness. Out of the cases where the area having the length a and that having the length b overlapped with each other under the same conditions, cases having conditions under the area having the length a and that having the length b were equal to each other were made better in thickness evenness.

### (Comparative Examples 6 to 16)

Each lengthwise stretched film was yielded in the same way as in Example 1 except that the irradiated-area lengths a and b were each from 5 to 45 mm, and the area having the length a and that having the length b overlapped with each other over a length of 5 to 40 mm. Various conditions are shown in Table 1, and results of the various measurements are shown in Table 2. The stretch starting position was not stable in the scope extending over the heated-area length on the film surface, so that the film was made worse in thickness unevenness than the film that had not yet been stretched.

### (Example 18 to 25)

Each lengthwise stretched film was yielded in the same way as in Example 1 except that the lengths A and B were each from 10 to 35 mm. Various conditions are shown in Table 1, and results of the various measurements are shown in Table 2. The examples other than Example 18 were made worse in average surface roughness than Example 1. In Examples 20, and 23 to 25, in which the length A or B was 35 mm, the average surface roughness was more than 3 nm. However, the films of these examples had no transcription scratches based on the roll surface form according to examinations with the naked eye, and were excellent in thickness evenness. Out of these examples, examples having the condition that the distances A and B were equal to each other were made better in thickness evenness, and were also small in the average surface roughness.

### (Examples 26 to 27)

Each lengthwise stretched film was yielded in the same way as in Example 1 except that the total electric power of the infrared heaters was set into the range of 15 to 25 kW (the upper heater: 10 to 17 kW; and the lower heater: 5 to 8 kW). Various conditions are shown in Table 1, and results of the various measurements are shown in Table 2. The obtained stretched film was made worse in thickness unevenness or average surface roughness than Example 1, but was made better in thickness evenness than the film that had not yet been stretched. Furthermore, the film was a film which scarcely had scratches, such as adhesion scratches and transcription scratches based on the rolls.

### (Example 28)

A lengthwise stretched film was yielded in the same way as in Example 1 except that the electric power of the infrared heater above the film was 11 kW and that of the infrared heater below the film was 9 kW. Various conditions are shown in Table 1, and results of the various measurements are shown in Table 2. The obtained stretched film was made worse in thickness unevenness and average surface roughness than Example 1, but was made better in thickness evenness than the film that had not yet been stretched. Furthermore, the film was a film which scarcely had scratches, such as adhesion scratches and transcription scratches based on the rolls.

### (Example 29)

A lengthwise stretched film was yielded in the same way as in Example 1 except that the electric power of the infrared heater above the film was 15 kW and that of the infrared heater below the film was 5 kW. Various conditions are shown in Table 1, and results of the various measurements are shown in Table 2. The obtained stretched film was made worse in thickness unevenness than Example 1, but was made better in thickness evenness than the film that had not yet been stretched. Furthermore, the film was a film which scarcely had scratches, such as adhesion scratches and transcription scratches based on the rolls.

### (Examples 30 to 32)

Each lengthwise stretched film was yielded in the same way as in Example 1 except that the longitudinal draw ratio was from 2.0 to 4.0. Various conditions are shown in Table 1, and results of the various measurements are shown in Table 2. The obtained stretched film was a film which was excellent in thickness evenness in the longitudinal direction and the width direction and which scarcely had scratches, such as adhesion scratches and transcription scratches based on the rolls.

### (Examples 33 to 37)

Each lengthwise stretched film was yielded in the same way as in Example 14 except that before the film was stretched, the average thickness thereof was from 300 to 3000 µm and the carrying speed was from 5 to 50 m/min to make the extruded-out amount from the flat die constant without being changed. Various conditions are shown in Table 1, and results of the various measurements are shown in Table 2. The obtained stretched film was made better in thickness evenness in the longitudinal direction and the width direction than the film that had not yet been stretched. Furthermore, the film was a film which scarcely had scratches, such as adhesion scratches and transcription scratches based on the rolls.

### (Example 38)

A lengthwise stretched film was yielded in the same way as in Example 1 except that as the thermoplastic resin, polyethylene-2,6-naphthalate (PEN) pellets were used which had a Tg of 120°C and a density of 1.34 g/cm³; before the film was stretched, the average thickness thereof was 350 µm and the carrying speed was 43 m/min; and the preliminary heating roll temperature and the longitudinal draw ratio were set to 110°C and 3.5, respectively. Various conditions are shown in Table 1, and results of the various measurements are shown in Table 2. The obtained stretched film was a film which was excellent in thickness evenness in the longitudinal direction and the width direction and which scarcely had scratches, such as adhesion scratches and transcription scratches based on the rolls.

### (Examples 39 to 40)

Each lengthwise stretched film was yielded in the same way as in Example 1 except that as the thermoplastic resin, pellets were used which were made of an amorphous cyclic olefin copolymer (COC) ("TOPAS" manufactured by Japan Polypropylene Corporation; Tg: 130°C; and density: 1.02 g/cm³) or a cyclic olefin copolymer (COP) ("ZEONOR" manufactured by Zeon Corporation; Tg: 160°C; and density: 1.01 g/cm³); before the film was stretched, the average thickness thereof was 200 µm and the carrying speed was 30 m/min; and the temperature of the preliminary heating roll temperature was set into the range of 125 to 155°C, and the total electric power of the infrared heaters was set to 7 kW (the upper heater: 4 kW and the lower heater: 3 kW) and the longitudinal draw ratio to 2.0. Various conditions are shown in Table 1, and results of the various measurements are shown in Table 2. The obtained stretched film was a film which was excellent in thickness evenness in the longitudinal direction and the width direction and which scarcely had scratches, such as adhesion scratches and transcription scratches based on the rolls.

**[Table 1-1]**

| | Used resin (before stretched) | | | Heater type | Heater electric power (kW) | | |
|---|---|---|---|---|---|---|---|
| | Species | Tg (°C) | Thickness (µm) | | Total electric power | Upper side | Lower side |
| Example 1 | PET | 80 | 1500 | Photo-concentration type | 20 | 13 | 7 |
| Example 2 | PET | 80 | 300 | Photo-concentration type | 20 | 13 | 7 |
| Example 3 | PET | 80 | 3000 | Photo-concentration type | 20 | 13 | 7 |
| Example 4 | PET | 80 | 1500 | Photo-concentration type | 20 | 13 | 7 |
| Example 5 | PET | 80 | 1500 | Photo-concentration type | 20 | 13 | 7 |
| Example 6 | PET | 80 | 1500 | Photo-concentration type | 20 | 13 | 7 |
| Example 7 | PET | 80 | 1500 | Photo-concentration type | 20 | 13 | 7 |
| Example 8 | PET | 80 | 1500 | Photo-concentration type | 20 | 13 | 7 |
| Example 9 | PET | 80 | 1500 | Photo-concentration type | 20 | 13 | 7 |
| Example 10 | PET | 80 | 1500 | Photo-concentration type | 20 | 13 | 7 |
| Example 11 | PET | 80 | 1500 | Photo-concentration type | 20 | 13 | 7 |
| Example 12 | PET | 80 | 1500 | Photo-concentration type | 20 | 13 | 7 |
| Example 13 | PET | 80 | 1500 | Photo-concentration type | 20 | 13 | 7 |
| Example 14 | PET | 80 | 1500 | Photo-concentration type | 20 | 13 | 7 |
| Example 15 | PET | 80 | 1500 | Photo-concentration type | 20 | 13 | 7 |
| Example 16 | PET | 80 | 1500 | Photo-concentration type | 20 | 13 | 7 |
| Example 17 | PET | 80 | 1500 | Photo-concentration type | 20 | 13 | 7 |
| Example 18 | PET | 80 | 1500 | Photo-concentration type | 20 | 13 | 7 |
| Example 19 | PET | 80 | 1500 | Photo-concentration type | 20 | 13 | 7 |
| Example 20 | PET | 80 | 1500 | Photo-concentration type | 20 | 13 | 7 |
| Example 21 | PET | 80 | 1500 | Photo-concentration type | 20 | 13 | 7 |
| Example 22 | PET | 80 | 1500 | Photo-concentration type | 20 | 13 | 7 |
| Example 23 | PET | 80 | 1500 | Photo-concentration type | 20 | 13 | 7 |
| Example 24 | PET | 80 | 1500 | Photo-concentration type | 20 | 13 | 7 |
| Example 25 | PET | 80 | 1500 | Photo-concentration type | 20 | 13 | 7 |
| Example 26 | PET | 80 | 1500 | Photo-concentration type | 15 | 10 | 5 |
| Example 27 | PET | 80 | 1500 | Photo-concentration type | 25 | 17 | 8 |
| Example 28 | PET | 80 | 1500 | Photo-concentration type | 20 | 11 | 9 |
| Example 29 | PET | 80 | 1500 | Photo-concentration type | 20 | 15 | 5 |
| Example 30 | PET | 80 | 1500 | Photo-concentration type | 20 | 13 | 7 |
| Example 31 | PET | 80 | 1500 | Photo-concentration type | 20 | 13 | 7 |
| Example 32 | PET | 80 | 1500 | Photo-concentration type | 20 | 13 | 7 |
| Example 33 | PET | 80 | 300 | Photo-concentration type | 20 | 13 | 7 |
| Example 34 | PET | 80 | 900 | Photo-concentration type | 20 | 13 | 7 |
| Example 35 | PET | 80 | 1800 | Photo-concentration type | 20 | 13 | 7 |
| Example 36 | PET | 80 | 2400 | Photo-concentration type | 20 | 13 | 7 |
| Example 37 | PET | 80 | 3000 | Photo-concentration type | 20 | 13 | 7 |
| Example 38 | PEN | 120 | 350 | Photo-concentration type | 20 | 13 | 7 |
| Example 39 | COC | 130 | 200 | Photo-concentration type | 7 | 4 | 3 |
| Example 40 | COP | 160 | 200 | Photo-concentration type | 7 | 4 | 3 |
| Comparative Example 1 | PET | 80 | 1500 | Photo-concentration type | 15 | 15 | None |
| Comparative Example 2 | PET | 80 | 1500 | Photo-concentration type | 24 | 24 | None |
| Comparative Example 3 | PET | 80 | 1500 | Diffusion Type | 20 | 13 | 7 |
| Comparative Example 4 | PET | 80 | 1500 | Diffusion Type | 25 | 17 | 8 |
| Comparative Example 5 | PET | 80 | 1500 | Photo-concentration type | 25 | 17 | 8 |
| Comparative Example 6 | PET | 80 | 1500 | Photo-concentration type | 20 | 13 | 7 |
| Comparative Example 7 | PET | 80 | 1500 | Photo-concentration type | 20 | 13 | 7 |
| Comparative Example 8 | PET | 80 | 1500 | Photo-concentration type | 20 | 13 | 7 |
| Comparative Example 9 | PET | 80 | 1500 | Photo-concentration type | 20 | 13 | 7 |
| Comparative Example 10 | PET | 80 | 1500 | Photo-concentration type | 20 | 13 | 7 |
| Comparative Example 11 | PET | 80 | 1500 | Photo-concentration type | 20 | 13 | 7 |
| Comparative Example 12 | PET | 80 | 1500 | Photo-concentration type | 20 | 13 | 7 |
| Comparative Example 13 | PET | 80 | 1500 | Photo-concentration type | 20 | 13 | 7 |
| Comparative Example 14 | PET | 80 | 1500 | Photo-concentration type | 20 | 13 | 7 |
| Comparative Example 15 | PET | 80 | 1500 | Photo-concentration type | 20 | 13 | 7 |
| Comparative Example 16 | PET | 80 | 1500 | Photo-concentration type | 20 | 13 | 7 |

**[Table 1-2]**

| | Irradiated-area length (mm) | | | Distance (mm) | | Preliminary heating temperature (°C) | Total draw ratio |
|---|---|---|---|---|---|---|---|
| | a | b | Overlap | A | B | | |
| Example 1 | 30 | 30 | 30 | 20 | 20 | 70 | 3.0 |
| Example 2 | 30 | 30 | 30 | 20 | 20 | 75 | 3.0 |
| Example 3 | 30 | 30 | 30 | 20 | 20 | 65 | 3.0 |
| Example 4 | 30 | 25 | 25 | 20 | 20 | 70 | 3.0 |
| Example 5 | 30 | 35 | 30 | 20 | 20 | 70 | 3.0 |
| Example 6 | 30 | 40 | 30 | 20 | 20 | 70 | 3.0 |
| Example 7 | 10 | 10 | 10 | 20 | 20 | 70 | 3.0 |
| Example 8 | 10 | 40 | 10 | 20 | 20 | 70 | 3.0 |
| Example 9 | 20 | 25 | 20 | 20 | 20 | 70 | 3.0 |
| Example 10 | 20 | 40 | 20 | 20 | 20 | 70 | 3.0 |
| Example 11 | 25 | 20 | 20 | 20 | 20 | 70 | 3.0 |
| Example 12 | 25 | 25 | 25 | 20 | 20 | 70 | 3.0 |
| Example 13 | 25 | 40 | 25 | 20 | 20 | 70 | 3.0 |
| Example 14 | 40 | 10 | 10 | 20 | 20 | 70 | 3.0 |
| Example 15 | 40 | 20 | 20 | 20 | 20 | 70 | 3.0 |
| Example 16 | 40 | 25 | 25 | 20 | 20 | 70 | 3.0 |
| Example 17 | 40 | 40 | 40 | 20 | 20 | 70 | 3.0 |
| Example 18 | 30 | 30 | 30 | 10 | 10 | 70 | 3.0 |
| Example 19 | 30 | 30 | 30 | 10 | 30 | 70 | 3.0 |
| Example 20 | 30 | 30 | 30 | 10 | 35 | 70 | 3.0 |
| Example 21 | 30 | 30 | 30 | 30 | 10 | 70 | 3.0 |
| Example 22 | 30 | 30 | 30 | 30 | 30 | 70 | 3.0 |
| Example 23 | 30 | 30 | 30 | 30 | 35 | 70 | 3.0 |
| Example 24 | 30 | 30 | 30 | 35 | 10 | 70 | 3.0 |
| Example 25 | 30 | 30 | 30 | 35 | 30 | 70 | 3.0 |
| Example 26 | 30 | 30 | 30 | 20 | 20 | 70 | 3.0 |
| Example 27 | 30 | 30 | 30 | 20 | 20 | 70 | 3.0 |
| Example 28 | 30 | 30 | 30 | 20 | 20 | 70 | 3.0 |
| Example 29 | 30 | 30 | 30 | 20 | 20 | 70 | 3.0 |
| Example 30 | 30 | 30 | 30 | 20 | 20 | 70 | 2.0 |
| Example 31 | 30 | 30 | 30 | 20 | 20 | 70 | 2.5 |
| Example 32 | 30 | 30 | 30 | 20 | 20 | 70 | 4.0 |
| Example 33 | 40 | 10 | 10 | 20 | 20 | 70 | 3.0 |
| Example 34 | 40 | 10 | 10 | 20 | 20 | 70 | 3.0 |
| Example 35 | 40 | 10 | 10 | 20 | 20 | 70 | 3.0 |
| Example 36 | 40 | 10 | 10 | 20 | 20 | 70 | 3.0 |
| Example 37 | 40 | 10 | 10 | 20 | 20 | 70 | 3.0 |
| Example 38 | 30 | 30 | 30 | 20 | 20 | 110 | 3.5 |
| Example 39 | 30 | 30 | 30 | 20 | 20 | 125 | 2.0 |
| Example 40 | 30 | 30 | 30 | 20 | 20 | 155 | 2.0 |
| Comparative Example 1 | 30 | None | None | 20 | None | 80 | 3.0 |
| Comparative Example 2 | 30 | None | None | 20 | None | 70 | 3.0 |
| Comparative Example 3 | Diffusion | Diffusion | None | 20 | 20 | 80 | 3.0 |
| Comparative Example 4 | Diffusion | Diffusion | None | 20 | 20 | 70 | 3.0 |
| Comparative Example 5 | 30 | 30 | None | 20 | 20 | 70 | 3.0 |
| Comparative Example 6 | 5 | 5 | 5 | 20 | 20 | 70 | 3.0 |
| Comparative Example 7 | 5 | 10 | 5 | 20 | 20 | 70 | 3.0 |
| Comparative Example 8 | 10 | 5 | 5 | 20 | 20 | 70 | 3.0 |
| Comparative Example 9 | 5 | 40 | 5 | 20 | 20 | 70 | 3.0 |
| Comparative Example 10 | 40 | 5 | 5 | 20 | 20 | 70 | 3.0 |
| Comparative Example 11 | 45 | 10 | 10 | 20 | 20 | 70 | 3.0 |
| Comparative Example 12 | 10 | 45 | 10 | 20 | 20 | 70 | 3.0 |
| Comparative Example 13 | 45 | 25 | 25 | 20 | 20 | 70 | 3.0 |
| Comparative Example 14 | 25 | 45 | 25 | 20 | 20 | 70 | 3.0 |
| Comparative Example 15 | 45 | 40 | 40 | 20 | 20 | 70 | 3.0 |
| Comparative Example 16 | 40 | 45 | 40 | 20 | 20 | 70 | 3.0 |

**[Table 2]**

| | Average thickness after film-stretching (µm) | Thickness unevenness R (%) | | Average surface roughness SRa (nm) | Preliminary heating roll scratches |
|---|---|---|---|---|---|
| | | Longitudinal direction | Width direction | | |
| Example 1 | 500 | 0.87 | 0.98 | 1.58 | None |
| Example 2 | 100 | 1.25 | 1.31 | 1.69 | None |
| Example 3 | 1000 | 1.05 | 1.10 | 1.52 | None |
| Example 4 | 500 | 1.30 | 1.22 | 1.78 | None |
| Example 5 | 500 | 1.31 | 1.26 | 1.56 | None |
| Example 6 | 500 | 1.66 | 1.64 | 1.58 | None |
| Example 7 | 500 | 2.20 | 2.01 | 1.60 | None |
| Example 8 | 500 | 2.38 | 2.32 | 1.65 | None |
| Example 9 | 500 | 2.14 | 2.00 | 1.53 | None |
| Example 10 | 500 | 2.27 | 2.18 | 1.77 | None |
| Example 11 | 500 | 2.01 | 1.95 | 1.70 | None |
| Example 12 | 500 | 1.21 | 1.22 | 1.51 | None |
| Example 13 | 500 | 1.85 | 1.81 | 1.57 | None |
| Example 14 | 500 | 2.33 | 2.26 | 1.78 | None |
| Example 15 | 500 | 2.06 | 2.17 | 1.50 | None |
| Example 16 | 500 | 1.99 | 1.85 | 1.73 | None |
| Example 17 | 500 | 1.86 | 1.73 | 1.69 | None |
| Example 18 | 500 | 1.09 | 1.03 | 1.43 | None |
| Example 19 | 500 | 1.17 | 1.22 | 2.33 | None |
| Example 20 | 500 | 1.29 | 1.29 | 3.48 | None |
| Example 21 | 500 | 1.16 | 1.12 | 2.06 | None |
| Example 22 | 500 | 1.12 | 1.08 | 1.87 | None |
| Example 23 | 500 | 1.38 | 1.42 | 3.87 | None |
| Example 24 | 500 | 1.26 | 1.24 | 3.02 | None |
| Example 25 | 500 | 1.35 | 1.33 | 3.36 | None |
| Example 26 | 500 | 1.95 | 2.15 | 1.50 | None |
| Example 27 | 500 | 0.95 | 1.01 | 2.23 | None |
| Example 28 | 500 | 1.02 | 1.15 | 1.73 | None |
| Example 29 | 500 | 1.13 | 1.27 | 1.46 | None |
| Example 30 | 750 | 1.42 | 1.39 | 1.78 | None |
| Example 31 | 600 | 1.21 | 1.26 | 1. 64 | None |
| Example 32 | 375 | 0.85 | 1.05 | 1.39 | None |
| Example 33 | 100 | 2.48 | 2.46 | 1.87 | None |
| Example 34 | 300 | 2.41 | 2.43 | 1.83 | None |
| Example 35 | 600 | 2.38 | 2.39 | 1.73 | None |
| Example 36 | 800 | 2.40 | 2.36 | 1.80 | None |
| Example 37 | 1000 | 2.41 | 2.44 | 1.84 | None |
| Example 38 | 100 | 1.51 | 1.45 | 1.59 | None |
| Example 39 | 100 | 1.39 | 1.43 | 2.21 | None |
| Example 40 | 100 | 1.37 | 1.35 | 2.60 | None |
| Comparative Example 1 | 500 | 1.54 | 1.47 | 3.34 | 5 series |
| Comparative Example 2 | 500 | 2.11 | 1.98 | 5.33 | 1 series |
| Comparative Example 3 | 500 | 3.07 | 2.70 | 4.11 | 4 series |
| Comparative Example 4 | 500 | 3.28 | 3.11 | 6.23 | 2 series |
| Comparative Example 5 | 500 | 4.02 | 4.53 | 3.54 | 1 series |
| Comparative Example 6 | 500 | 3.54 | 3.27 | 1.73 | None |
| Comparative Example 7 | 500 | 3.32 | 3.09 | 1.52 | None |
| Comparative Example 8 | 500 | 3.20 | 2.92 | 1.61 | None |
| Comparative Example 9 | 500 | 2.90 | 2.76 | 1.59 | None |
| Comparative Example 10 | 500 | 2.91 | 2.74 | 1.58 | None |
| Comparative Example 11 | 500 | 2.80 | 2.46 | 1.74 | None |
| Comparative Example 12 | 500 | 2.82 | 2.54 | 1.52 | None |
| Comparative Example 13 | 500 | 2.73 | 2.45 | 1.79 | None |
| Comparative Example 14 | 500 | 2.71 | 2.54 | 1.62 | None |
| Comparative Example 15 | 500 | 3.01 | 2.79 | 1.64 | None |
| Comparative Example 16 | 500 | 3.00 | 2.81 | 1.65 | None |

According to the above-mentioned working examples, and comparative examples, the following are evident: thermoplastic resin films obtained by the producing method of the invention are made better in thickness evenness in the longitudinal direction and the width direction than the films that have not yet been stretched, and further neither have transcription scratches based on roll surface forms nor adhesion scratches based on a preliminary heating roll, this situation being demonstrated by the average surface roughness.

### INDUSTRIAL APPLICABILITY

A thermoplastic resin film obtained by the lengthwise stretching method of the invention is excellent in thickness evenness in the longitudinal direction and the width direction, and further scarcely has scratches, such as adhesion scratches and transcription scratches. The film is usable, in particular, for optical articles. Moreover, by laying an easily bondable layer onto a surface of the lengthwise stretched film, or stretching the film laterally to be biaxially stretched, the film is usable suitably for a base film of a prism sheet, an antireflective film, a hard coat film, a light diffusion plate or some other, a base film of a near infrared ray absorption film or electromagnetic wave absorption film used as a front plate of a plasma display, or a base film of a touch panel or a transparent conductive film.

### DESCRIPTION OF REFERENCE SIGNS

1: Roll stretching machine
2: Film
3: Low speed roll
3': High speed roll
4: Nip roll
4': Nip roll
5: Photo-concentration heater above the film, and a housing thereof
5': Photo-concentration heater below the film, and a housing thereof
6: Area having an irradiated-area length a, which is an area of the film that is irradiated with the upper photo-concentration heater
6': Area having an irradiated-area length b, which is an area of the film that is irradiated with the lower photo-concentration heater
7: Focus of the upper photo-concentration heater
7': Focus of the lower photo-concentration heater
8: Distance A from the lower end of the housing of the upper photo-concentration heater to one of the surfaces of the film
8': Distance B from the upper end of the housing of the lower photo-concentration heater to the other surface of the film
9: Radiating-area width of the lower end of the housing of the upper photo-concentration heater
9': Radiating-area width of the upper end of the housing of the lower photo-concentration heater

## Claims

1. A method for stretching a film (2) in the longitudinal direction thereof by a difference in circumferential speed between front (3, 4) and rear rolls (3', 4'), wherein heaters are used to radiate infrared rays onto the film from above the film and below the film,
**characterized in that**
photo-concentration heaters (5, 5'), capable of converging infrared diffused light from an infrared heater partially or entirely, are used to radiate infrared rays onto the film from above the film and below the film, and when a represents the irradiated-area length (6) in the longitudinal direction of an area of the film that is irradiated with converged light of the infrared rays radiated from above the film and b represents the irradiated-area length (6') in the longitudinal direction of an area of the film that is irradiated with converged light of the infrared rays radiated from below the film, the area having the length a and the area having the length b overlap with each other, and the a and the b are each 10 mm or more and 40 mm or less.

2. The method for stretching a film according to claim 1, wherein when A represents the distance (8) from the lower end of a housing of the photo-concentration heater above the film to one of both surfaces of the film, and B represents the distance (8') from the upper end of a housing of the photo-concentration heater below the film to the other surface of the film, the A and the B are each 10 mm or more and 30 mm or less.

3. The method for stretching a film according to claim 1 or 2, wherein lengths a and b are each 25 mm or more and 40 mm or less.

4. The method for stretching a film according to any one of claims 1 to 3, wherein in the longitudinal direction, the central position of the area having the irradiated-area length a is consistent with that of the area having the irradiated-area length b, and these areas a and b are equal to each other.

5. The method for stretching a film according to any one of claims 2 to 4, wherein the A is equal to the B.

6. The method for stretching a film according to any one of claims 1 to 5, wherein the output power of the photo-concentration heater above the film is 1.2 times or more and 3.0 times or less that of the photo-concentration heater below the film.

7. The method for stretching a film according to any one of claims 1 to 6, wherein before the film is stretched in the longitudinal direction, the film has a thickness of 300 µm or more and 3000 µm or less.

8. The method for stretching a film according to any one of claims 1 to 7, wherein the draw ratio of the film is 2 or more and 4 or less in the longitudinal direction.

9. The method for stretching a film according to any one of claims 1 to 8, comprising the step of heating the film (2) preliminarily before the film is stretched by the difference in circumferential speed between the front (3, 4) and rear rolls (3', 4'), the heating temperature for the preliminary heating is [the glass transition temperature of the film - 15]°C or higher and [the glass transition temperature of the film - 5]°C or lower.

10. A method for producing a film, using the film stretching method recited in any one of claims 1 to 9.

## Patentansprüche

1. Verfahren zum Verstrecken von einer Folie (2) in ihrer Längsrichtung durch einen Unterschied in der Umlaufgeschwindigkeit zwischen Vorder-(3, 4) und Rückwalzen (3', 4'), wobei Heizvorrichtungen verwendet werden, um auf die Folie von oberhalb der Folie und unterhalb der Folie Infrarotstrahlung einzustrahlen,
**dadurch gekennzeichnet, dass**
Fotokonzentrationsheizvorrichtungen (5, 5'), die in der Lage sind, Infrarostreulicht von einer Infrarotheizvorrichtung teilweise oder vollständig zu bündeln, verwendet werden, um auf die Folie von oberhalb der Folie und unterhalb der Folie Infrarotstrahlung einzustrahlen, und wenn a die Länge (6) der bestrahlten Fläche in Längsrichtung von einer Fläche der Folie repräsentiert, die mit gebündeltem Licht der Infrarotstrahlung, die von oberhalb der Folie eingestrahlt wird, bestrahlt wird, und b die Länger (6') der bestrahlten Flächen in Längsrichtung von einer Fläche der Folie repräsentiert, die mit gebündeltem Licht der Infrarotstrahlung, die von unterhalb der Folie eingestrahlt wird, bestrahlt wird, dann überlappt die Fläche, die die Länge a aufweist, mit der Fläche, die die Länge b aufweist, wobei die a und die b jeweils 10 mm oder mehr und 40 mm oder weniger betragen.

2. Verfahren zum Verstrecken von einer Folie nach Anspruch 1, wobei, wenn A den Abstand (8) von dem unteren Ende eines Gehäuses der Fotokonzentrationsheizvorrichtung oberhalb der Folie hin zu einer von beiden Oberflächen der Folie repräsentiert, und B den Abstand (8') von dem oberen Ende eines Gehäuses der Fotokonzentrationsheizvorrichtung unterhalb der Folie hin zu der anderen Oberfläche der Folie repräsentiert, der A und B jeweils 10 mm oder mehr und 30 mm oder weniger beträgt.

3. Verfahren zum Verstrecken von einer Folie nach Anspruch 1 oder 2, wobei die Längen a und b jeweils 25 mm oder mehr und 40 mm oder weniger betragen.

4. Verfahren zum Verstrecken von einer Folie nach einem der Ansprüche 1 bis 3, wobei in der Längsrichtung die zentrale Position der Fläche, die die Länge der bestrahlten Flächen a aufweist, mit der von der Fläche übereinstimmt, die die Länge der bestrahlten Fläche b aufweist, und wobei diese Flächen a und b gleich zueinander sind.

5. Verfahren zum Verstrecken von einer Folie nach einem der Ansprüche 2 bis 4, wobei der A gleich dem B ist.

6. Verfahren zum Verstrecken von einer Folie nach einem der Ansprüche 1 bis 5, wobei die Ausgabeenergie der Fotokonzentrationsheizvorrichtung über der Folie das 1,2-Fache oder mehr und das 3,0-Frache oder weniger von der der Fotokonzentrationsheizvorrichtung unterhalb der Folie beträgt.

7. Verfahren zum Verstrecken von einer Folie nach einem der Ansprüche 1 bis 6, wobei, bevor die Folie in der Längsrichtung verstreckt wird, die Folie eine Dicke von 300 µm oder mehr und 3000 µm oder weniger aufweist.

8. Verfahren zum Verstrecken von einer Folie nach einem der Ansprüche 1 bis 7, wobei das Zugverhältnis der Folie in Längsrichtung 2 oder mehr und 4 oder weniger beträgt.

9. Verfahren zum Verstrecken von einer Folie nach einem der Ansprüche 1 bis 8, umfassend den Schritt des vorläufigen Erwärmens von der Folie (2) bevor die Folie durch den Unterschied in der Umlaufgeschwindigkeit zwischen den Vorder- (3, 4) und Rückwalzen (3', 4') verstreckt wird, wobei die Erwärmungstemperatur für das vorläufige Erwärmen [die Glasübergangstemperatur der Folie - 15]°C oder höher und [die Glasübergangstemperatur der Folie - 5]°C oder weniger beträgt.

10. Verfahren zum Herstellen von einer Folie, wobei das Folienversteckverfahren nach einem der Ansprüche 1 bis 9 verwendet wird.

## Revendications

1. Procédé pour étirer un film (2) dans la direction longitudinale de celui-ci par une différence de vitesse circonférentielle entre des rouleaux avant (3, 4) et arrière (3', 4'), dans lequel des dispositifs de chauffage sont utilisés pour rayonner des rayons infrarouges sur le film à partir du dessus du film et du dessous du film,
**caractérisé en ce que**
des dispositifs de chauffage par photo-concentration (5, 5'), capables de faire converger la lumière infrarouge diffusée provenant d'un dispositif de chauffage infrarouge partiellement ou entièrement, sont utilisés pour rayonner des rayons infrarouges sur le film à partir du dessus du le film et du dessous du film, et lorsque a représente la longueur de zone irradiée (6) dans la direction longitudinale d'une zone du film qui est irradiée avec la lumière qui a convergé des rayons infrarouges rayonnés à partir du dessus du film et b représente la longueur de zone irradiée (6') dans la direction longitudinale d'une zone du film qui est irradiée avec la lumière qui a convergé des rayons infrarouges rayonnés à partir du dessous du film, la zone ayant la longueur a et la zone ayant la longueur b se superposent, et a et b sont chacun de 10 mm ou plus et de 40 mm ou moins.

2. Procédé pour étirer un film selon la revendication 1, dans lequel lorsque A représente la distance (8) de l'extrémité inférieure d'un logement du dispositif de chauffage par photo-concentration au-dessus du film jusqu'à l'une des deux surfaces du film, et B représente la distance (8') de l'extrémité supérieure d'un logement du dispositif de chauffage par photo-concentration au-dessous du film jusqu'à l'autre surface du film, A et B sont chacun de 10 mm ou plus et de 30 mm ou moins.

3. Procédé pour étirer un film selon la revendication 1 ou 2, dans lequel les longueurs a et b sont chacune de 25 mm ou plus et de 40 mm ou moins.

4. Procédé pour étirer un film selon l'une quelconque des revendications 1 à 3, dans lequel, dans la direction longitudinale, la position centrale de la zone ayant la longueur de zone irradiée a est cohérente avec celle de la zone ayant la longueur de zone irradiée b, et ces zones a et b sont égales l'une à l'autre.

5. Procédé pour étirer un film selon l'une quelconque des revendications 2 à 4, dans lequel A est égal à B.

6. Procédé pour étirer un film selon l'une quelconque des revendications 1 à 5, dans lequel la puissance de sortie du dispositif de chauffage par photo-concentration au-dessus du film est égale à 1,2 fois ou plus et 3,0 fois ou moins celle du dispositif de chauffage par photo-concentration au-dessous du film.

7. Procédé pour étirer un film selon l'une quelconque des revendications 1 à 6, dans lequel, avant que le film soit étiré dans la direction longitudinale, le film a une épaisseur de 300 µm ou plus et de 3000 µm ou moins.

8. Procédé pour étirer un film selon l'une quelconque des revendications 1 à 7, dans lequel le rapport d'étirage du film est de 2 ou plus et de 4 ou moins dans la direction longitudinale.

9. Procédé pour étirer un film selon l'une quelconque des revendications 1 à 8, comprenant l'étape de chauffage du film (2) au préalable avant que le film soit étiré par la différence de vitesse circonférentielle entre les rouleaux avant (3, 4) et arrière (3', 4'), la température de chauffage pour le chauffage préliminaire est égale à [la température de transition vitreuse du film -15]°c ou plus et à [la température de transition vitreuse -5]°c ou moins.

10. Procédé pour produire un film, en utilisant le procédé d'étirage de film exposé dans l'une quelconque des revendications 1 à 9.
